# EUROPÄISCHE PATENTSCHRIFT

(11) **EP 4 105 505 B1**
(45) Veröffentlichungstag und Bekanntmachung des Hinweises auf die Patenterteilung: **17.12.2025**
(21) Anmeldenummer: 22178210.5
(22) Anmeldetag: 09.06.2022
(51) Int. Cl.: F16C 33/50, F16C 33/54, F16C 19/22, F16C 33/46

(54) **KÄFIGSEGMENT FÜR EINEN ROLLENLAGERKÄFIG**
CAGE SEGMENT FOR A ROLLER BEARING CAGE
SEGMENT DE CAGE POUR UNE CAGE DE PALIER À ROULEAUX

(30) Priorität: 18.06.2021 DE 102021206282
(43) Veröffentlichungstag der Anmeldung: 21.12.2022
(73) Patentinhaber: Aktiebolaget SKF, 415 50 Göteborg (SE)
(72) Erfinder: Beyfuss, Berthold, 97535 Wasserlosen-Kaisten (DE); Friedrich, Hans-Jürgen, 97486 Königsberg-Römershofen (DE); Radina, Alfred, 97711 Poppenlauer (DE); Schierling, Jonas, 97437 Hassfurt (DE); Soellner, Maximilian, 97494 Bundorf (DE)
(74) Vertreter: Kuhstrebe, Jochen

(56) Entgegenhaltungen:
- DE-A1- 102015 206 533
- DE-A1- 102016 216 286
- DE-A1- 102019 115 335
- US-A- 3 820 867

## Beschreibung

Vorliegende Erfindung betrifft ein Käfigsegment für einen Wälzlagerkäfig gemäß dem Oberbegriff von Patentanspruch 1. Vorliegende Erfindung betrifft des Weiteren einen Wälzlagerkäfig mit einer Mehrzahl von Käfigsegmenten gemäß Patentanspruch 9 und ein Wälzlager gemäß Patentanspruch 10.

Wälzkörper in Wälzlager können beispielsweise durch Wälzlagerkäfige geführt und gehalten werden. Dies kann nicht nur im Betrieb des Wälzlagers von Nutzen sein, sondern auch bei dem Zusammenbau des Wälzlagers. Es ist bekannt, dass Wälzlagerkäfige zum einen aus Metall durch verschiedene Herstellungsverfahren und zum anderen aus einem Kunststoff, beispielsweise durch ein Spritzgussverfahren, hergestellt werden können. Aufgrund des Temperaturverhaltens und der benötigten Festigkeit des Materials kann es notwendig sein, insbesondere einen glasfaserverstärkten Kunststoff, wie zum Beispiel glasfaserverstärktes PEEK, zu verwenden. Allerdings können gerade bei Großlagern diese Wälzlagerkäfige allein schon durch die benötigten Materialmengen, insbesondere bei Kunststoffen mit einem hohen Kilogrammpreis, sehr teuer werden. Meist werden größere Metallkäfige dadurch gefertigt, indem Vollmaterial zunächst gewalzt und dann spanend weiterbearbeitet wird. Dabei ist den bekannten Verfahren gemein, dass sie einerseits einen hohen Materialeinsatz erfordern, und anderseits eine Kombination von mehreren, zum Teil aufwendigen Herstellungsverfahren mit unterschiedlichen Werkzeugmaschinen erfordern, so dass die Herstellung aufwendig und/oder kostenintensiv sein kann.

DE 10 2019 115335 A1 beschreibt ein Distanzstück für ein Kugellager, das einen Streifenabschnitt aus Blech umfasst, welcher zu einem Ring gebogen ist, der zwei konkav gekrümmte Anlaufflächen für Wälzkörper aufweist. Dieses Dokument offenbart ein Käfigsegment nach dem Oberbegriff des Anspruchs 1.

DE 10 2015 206533 A1 beschreibt ein Käfigsegment eines Käfigs eines Wälzlagers, das aus zwei in Axialrichtung des Käfigs mit Abstand zueinander angeordneten Seitenplatten und zwei in Umfangsrichtung des Käfigs mit Abstand zueinander angeordneten Querplatten besteht, wobei die beiden Querplatten mit den beiden Seitenplatten fest verbunden sind, und bei dem die beiden Querplatten und die beiden Seitenplatten eine Tasche zur Aufnahme eines Wälzkörpers bilden. Die Seitenplatten weisen an ihren beiden in Umfangsrichtung des Käfigs weisenden Enden jeweils eine Nut auf, an den beiden axialen Enden der Querplatten ist jeweils ein in Axialrichtung weisender Steg ausgebildet, die Stege der Querplatten sind in zugeordneten Nuten der Seitenplatten angeordnet, und die Querplatten sind im Bereich der Stege fest mit den Seitenplatten verbunden.

US 3 820 867 A beschreibt einen segmentierten Haltering für ein Kugellager.

DE 10 2016 216 286 A1 beschreibt einen segmentierten Wälzlagerkäfig aus einer Reihe von zu einem Käfigring zusammengesetzten Käfigsegmenten, wobei die Käfigsegmente aus jeweils zwei im Wesentlichen in Umfangsrichtung des Wälzlagerkäfigs sich erstreckende Seitenplatten und wenigstens einen die Seitenplatten miteinander verbindenden Quersteg bestehen, wobei ferner die Seitenplatten benachbarter Käfigsegmente über daran ausgebildete Stirnseiten aneinander angrenzen, und wobei Mittel zum Verbinden der Käfigsegmente miteinander vorgesehen sind.

Es ist deshalb Aufgabe vorliegender Erfindung, ein Käfigsegment für einen Wälzlagerkäfig bereitzustellen, der einfach und kostengünstig hergestellt werden kann.

Diese Aufgabe wird durch ein Käfigsegment für einen Wälzlagerkäfig gemäß Patentanspruch 1, einen Wälzlagerkäfig gemäß Patentanspruch 9 und ein Wälzlager gemäß Patentanspruch 10.

Im Folgenden wird ein Käfigsegment für einen mehrteiligen Wälzlagerkäfig, insbesondere für Großwälzlager vorgeschlagen. Das Käfigsegment kann insbesondere ein Käfigsegment für ein Rollenlager sein, d.h. ein Wälzlager mit rollenförmigen Wälzkörpern, wie zum Beispiel Kegelrollen, Zylinderrollen, Tonnen, Nadeln, und dergleichen. Um den Materialeinsatz und den Fertigungsaufwand zu reduzieren, liegt in einer Vorstufe der Fertigung das Käfigsegment als Bausatz vor, der aus einem oder mehreren ebenen Metallblechbauteilen besteht, wobei die Metallblechbauteile dazu ausgelegt sind, zusammengesetzt zu sein, um das Käfigsegment auszubilden. Dabei weist das Käfigsegment in seiner zusammengesetzten Form mindestens eine Fügestelle auf, an der zwei Enden der Metallblechbauteile zusammengefügt sind, um eine Tasche zu bilden, die dazu geeignet ist, zumindest einen Wälzkörper aufzunehmen. Das heißt, bei einem Metallblechbauteil wird dieses an seinen Enden zusammengefügt. Durch die Verwendung von Metallblech kann im Vergleich zu einem herkömmlichen Käfigsegment, insbesondere aus Kunststoff, das Käfigsegment dünner gestaltet werden. Dies hat neben einer Gewichts- und Materialeinsparung den weiteren Vorteil, dass durch den daraus resultierenden geringeren Abstand zwischen den Wälzkörpern gerade bei großen Wälzlagern mehr Wälzkörper in dem Wälzlager untergebracht werden können, wodurch eine Leistungsfähig des Wälzlagers erhöht werden kann. Bei einem Großwälzlager kann es sich insbesondere um ein Wälzlager mit einem Durchmesser von mehr als einem Meter handeln.

Bei dem Metallblech kann es sich insbesondere um eine Metallblechplatte, eine Metallblechtafel, ein Metallblechband, insbesondere ein aufgewickeltes Metallblechband (ein sogenanntes Coil) oder dergleichen handeln. Metallblech kann einfach und kostengünstig, beispielsweise durch Schneiden, Laserschneider, Prägen, Tiefen und Biegen, bearbeitet und geformt werden. Ferner kann auf ein zerspanendes Bearbeitungsverfahren verzichtet werden, sodass auch ein Materialausnutzungsgrad erhöht werden kann.

Bevorzugt sind das eine oder die mehreren Metallblechbauteile des Käfigsegments aus einem Metallblech geschnitten, insbesondere lasergeschnitten, gestanzt und/oder genibbelt. Mit anderen Worten werden die für das Käfigsegment benötigten Trennlinien in dem Metallblech mittels Schneiden, Stanzen, Nibbeln oder dergleichen vorgesehen. Das bedeutet, dass zunächst die Kontur des Käfigsegment in das Metallblech geschnitten oder gestanzt wird und anschließend die Form des Käfigsegments aus dem Metallblech gelöst wird. Dabei kann ein Laser, ein Stanzwerkzeug, eine Nibbelmaschine oder dergleichen verwendet werden.

Gemäß der beanspruchten Erfindung, ist zumindest eines der Metallblechbauteile der Vorstufe des Käfigsegments mit zumindest einem Funktionselement versehen, wobei das zumindest eine Funktionselement umgeformt ist. Bevorzugt ist das Funktionselement geprägt, tiefgezogen und/oder gebogen. Ferner kann das zumindest eine Funktionselement an dem Käfigsegment in der Vorstufe der Fertigung ausgeformt sein. Durch Ausformen in der Vorstufe der Fertigung, das heißt, bevor das Käfigsegment zusammengesetzt ist, kann das Vorsehen des Funktionselements vereinfacht werden. Auch kann die Positionierung des Funktionselements in der flachen Vorstufe des Käfigsegments präziser und schneller erfolgen.

Gemäß einer weiteren Ausführungsform hat das Käfigsegment bezogen auf einen in einem Wälzlager eingebauten Zustand eine Länge, die durch die axiale Länge des in dem Käfigsegment aufnehmbaren Wälzkörpers definiert ist, eine Breite, die durch den Durchmesser des aufnehmbaren Wälzkörpers definiert ist, und eine Höhe, wobei die Höhe des Käfigsegments über das Käfigsegment hinweg im Wesentlichen gleich ist. Unter der Höhe wird insbesondere eine Ausdehnung des Käfigsegments, das in einem Wälzlager eingesetzt ist, in einer radialen Richtung des Wälzlagers verstanden. Durch die im Wesentlichen gleichen Höhe des Käfigsegments über das Käfigsegment hinweg kann das Material des Käfigsegments einen Rahmen, insbesondere um die Funktionselemente, bilden, wodurch die Stabilität des Funktionselements und/oder des Käfigsegments erhöht wird.

Das zumindest eine Funktionselement ist ein Halteelement, das dazu ausgebildet ist, mit einem Wälzkörper zusammenzuwirken, um den Wälzkörper zu halten, wobei das Halteelement in der zusammengesetzten Form des Käfigsegments der Tasche zugewandt und/oder abgewandt ist. Insbesondere kann ein Halteelement dazu ausgebildet sein, ein in der Tasche des Käfigsegments aufgenommenen Wälzkörper in dem Käfigsegment, insbesondere an einer gewünschten Position, zu halten. Alternativ oder zusätzlich kann das Halteelement als eine Lasche ausgebildet sein, so dass ein Wälzkörper in das Käfigsegment eingeschnappt werden kann und sich der Wälzkörper beispielsweise auch bei einer Überkopfmontage nicht von dem Käfigsegment löst. Beispielsweise kann das Halteelement dazu ausgebildet sein, zu verhindern, dass das Käfigsegment radial nach außen wandert und/oder dafür zu sorgen, dass das Käfigsegment um den Wälzkörper herum bleibt. Ferner kann das zumindest eine Funktionselement ein Führungselement sein, das dazu ausgebildet ist, mit einem Bord zusammenzuwirken, um das Käfigsegment zu führen, wobei das Führungselement in der zusammengesetzten Form des Käfigsegments dem Bord zugewandt ist. Durch ein Führen an einem Bord des Wälzlagers kann vorteilhafterweise auf eine Führung des Wälzlagerkäfigs an einer Laufbahn des Wälzlagers verzichtet werden, wodurch die Lebensdauer der Laufbahnen erhöht werden kann.

Weiterhin ist das zumindest eines der Metallblechbauteile mit zumindest einem Funktionselement versehen, das ein Verbindungselement ist, das dazu ausgelegt ist, mit einem Kopplungselement zusammenzuwirken, um das Käfigsegment mit einem weiteren Käfigsegment zu verbinden. Die Käfigsegmente können durch das Kopplungselement zusätzlich zusammengehalten werden, wodurch der Käfigverbund an Stabilität gewinnt und/oder eine Montage des Käfigs vereinfacht werden kann. Durch das Kopplungselement, welches beispielsweise ein Seil, Draht oder ein Ring sein kann und eine definierte Vorspannung hat, können die Käfigsegmente geführt werden.

Bevorzugt kann das Verbindungselement zumindest eine Öse aufweisen, durch die das Kopplungselement durchfädelbar ist. Bei einer Ausgestaltung der Verbindungselemente als Ösen kann das Kopplungselement auf einfache Weise durch diese Ösen durchgeführt und bei Bedarf wieder entfernt werden. Das Kopplungselement ist dabei nicht an den Ösen fixiert, sondern kann sich in den Ösen bewegen. Hierdurch wird ein Spiel zwischen den Käfigsegmenten, und damit den Wälzkörpern, und eine Bewegung der Käfigsegmente zueinander nicht eingeschränkt. Alternativ können die Ösen auch als offene Haken oder Laschen ausgebildet sein, in die das Kopplungselement einhängbar oder einklipsbar oder einschnappbar ist.

Gemäß einer weiteren bevorzugten Ausführungsform weist das Käfigsegment an der Fügestelle an dem ersten Ende ein erstes Ausrichtungselement und an dem zweiten Ende ein zweites Ausrichtungselement auf, wobei das zweite Ausrichtungselement komplementär zu dem ersten Ausrichtungselement ist, und wobei das erste und das zweite Ausrichtungselement zusammenwirken, um das erste Ende und das zweite Ende in zumindest einer ersten Richtung festzulegen. Beispielsweise können die Ausrichtungselemente dazu ausgebildet sein, das erste Ende und das zweite Ende derart auszurichten, dass das Käfigsegment eine kantenfreie oder stufenfreie einer Laufbahn eines Wälzkörperrings gegenüberliegende Fläche aufweist. Ferner kann das Ausrichtungselement auch dazu eingerichtet sein, in einer zu der ersten Richtung senkrechten zweiten Richtung eine Einstellungsmöglichkeit bereitzustellen, sodass die Fügestelle dazu geeignet ist, Fertigungstoleranzen zu kompensieren. Ferner können das erste und das zweite Ausrichtungselement dazu eingerichtet sein, ineinander einzugreifen. Beispielsweise kann das erste Ausrichtungselement eine erste Verzahnung und das zweite Ausrichtungselement ein zu der ersten Verzahnung komplementäre zweite Verzahnung aufweisen.

Gemäß einem weiteren Aspekt wird ein Wälzlagerkäfig, insbesondere für Großwälzlager, mit einer Mehrzahl von Käfigsegmenten, wie voranstehend beschrieben, vorgeschlagen. Dabei kann eine Mehrzahl von Käfigsegmenten über ein Kopplungselement zumindest zeitweise verbindbar sein. Dabei kann beispielsweise jeder zweite Wälzkörper in einem Käfigsegment geführt werden. Alternativ kann auch ein Käfigsegment für jeweils einen Wälzkörper vorgesehen sein. Beispielsweise kann der Außendurchmesser des Wälzlagerkäfigs mehr als 1200mm betragen.

Gemäß noch einem weiteren Aspekt wird ein Wälzlager, insbesondere ein Großwälzlager, mit mindestens einem Innenring und mindestens einem Außenring vorgeschlagen, wobei zwischen dem Innenring und dem Außenring Wälzkörper angeordnet sind, wobei die Wälzkörper durch einen oben beschriebenen Wälzlagerkäfig gehalten werden.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine perspektivische Ansicht eines Käfigsegments gemäß einer ersten Ausführungsform;
- Fig. 2:: eine erste perspektivische Ansicht eines Metallblechbauteils des Käfigsegments der Fig. 1,
- Fig. 3:: eine zweite perspektivische Ansicht eines Metallblechbauteils des Käfigsegments der Fig. 1,
- Fig. 4:: eine perspektivische Ansicht eines Wälzlagerkäfigs gemäß einer ersten Ausführungsform,
- Fig. 5:: eine perspektivische Ansicht eines Käfigsegments gemäß einer zweiten Ausführungsform;
- Fig. 6:: eine perspektivische Ansicht eines Käfigsegments gemäß einer dritten Ausführungsform, und
- Fig. 7:: eine perspektivische Ansicht eines Käfigsegments gemäß einer vierten Ausführungsform.

Im Folgenden werden gleiche oder funktionell gleichwirkende Elemente mit denselben Bezugszeichen gekennzeichnet.

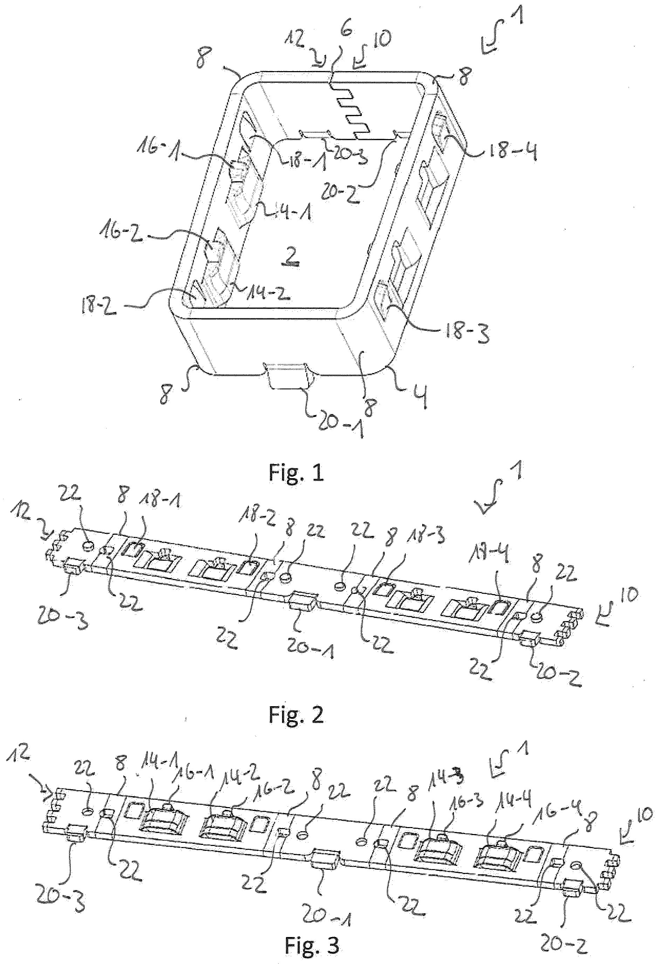

Mit Bezug auf die Fig. 1 bis 3 wird ein Käfigsegment 1 gemäß einer ersten Ausführungsform gezeigt. Die Fig. 1 zeigt eine perspektivische Ansicht auf das Käfigsegment 1, die Fig.2 zeigt eine perspektivische Ansicht auf die der Tasche 2 abgewandten Fläche des ausgefalteten Käfigsegments 1 der Fig. 1, und die Fig. 3 zeigt eine perspektivische Ansicht auf die der Tasche 2 zugewandten Fläche des ausgefalteten Käfigsegments 1 der Fig. 1.

Das Käfigsegment 1 umfasst ein Metallblechbauteil 4, das an einer Fügestelle 6 zusammengefügt ist, um eine Taschen 2 zu bilden, die dazu eingerichtet ist, zumindest einen Wälzkörper aufzunehmen. Das Käfigsegment 1 der Fig. 1 besteht in einer Vorstufe der Fertigung aus einem Bausatz mit einem ebenen Metallblechbauteil 4.

Um das Käfigsegment 1 aus dem Metallblechbauteil 4 zusammenzusetzen, wird das Metallblechbauteil 4 jeweils an vorgegebenen Eckbereichen 8 gebogen und an den zwei Enden des Metallblechbauteils 4 zusammengefügt, wodurch die Fügestelle 6 gebildet wird. Das zusammengefügte Käfigsegment 1 bildet die Tasche 2, die dazu geeignet ist, zumindest einen Wälzkörper aufzunehmen, wobei die Eckbereiche 8 die Ecken des Käfigsegments 1 bilden.

An den Enden des Metallblechbauteils 4 sind ein ersten Ausrichtungselement 10 und ein zweiten Ausrichtungselement 12, das komplementäre zu dem ersten Ausrichtungselement 10 ist, vorgesehen. Bei der in Fig. 1 bis 3 gezeigten Ausführungsform sind die Ausrichtungselemente 10, 12 rechteckige Verzahnungen. Es sind allerdings auch andere Formen, wie beispielsweise wellenförmige, dreieckige und/oder mehreckige, vorstellbar. Die beiden Ausrichtungselemente 10, 12 können beispielsweise gestanzt und/oder geschnitten werden. Dabei sind die Ausrichtungselement 10, 12 dazu ausgebildet, das Käfigsegment 1 an der Fügestelle 6 derart auszurichten, dass das Käfigsegment zusammengefügt werden kann. Insbesondere sind die Ausrichtungselemente 10, 12 dazu ausgelegt, die aneinander gefügten Seiten in einer ersten Richtung, die senkrecht zu der Fläche der Tasche 2 ist, festzulegen und in zumindest einer zu der ersten Richtung senkrechten Richtung eine Einstellbarkeit bereitzustellen, die dazu geeignet ist, Fertigungstoleranzen und dergleichen zu kompensieren.

Ferner sind an dem Käfigelement 1 vier der Tasche 2 zugewandte Halteelemente 14-1, 14-2, 14-3, 14-4 vorgesehen, die dazu ausgelegt sind, den Wälzkörper 32 in der Tasche 2 an einer gewünschten Position zu halten. Ferner sind über den Halteelemente 14-1, 14-2, 14-3, 14-4 weiterhing vier zur Tasche geneigte Laschen 16-1, 16-2, 16-3, 16-4 vorgesehen, die dazu ausgebildet sind, einen Wälzkörper in der Tasche 2 zu halten bzw. zu verhindern, dass das Käfigsegment 1 im Gebrauch radial nach außen wandert. Außerdem sind vier weitere Laschen 18-1, 18-2, 18-3, 18-4 an der Tasche abgewandten Seite des Käfigsegments 1 vorgesehen, die dazu ausgelegt sind, einen Wälzkörper zu halten, der außen an dem Käfigsegment 1 geführt wird. Des Weiteren sind an den einem Bord eines Wälzlagers zugewandten Flächen des Käfigsegments 1 Führungselemente 20-1, 20-2, 20-3 vorgesehen, die dazu ausgelegt sind, einen Wälzlagerkäfig an einem Bord des Wälzlagers zu führen. Dadurch kann vorteilhafterweise auf eine Führung des Wälzlagerkäfigs an eine Laufbahn des Wälzlagers verzichtet werden, wodurch die Lebensdauer der Laufbahnen erhöht werden kann. Außerdem sind an dem Käfigsegment Verbindungselemente 22 vorgesehen, an denen Kopplungselemente angebracht werden können, um die einzelnen Käfigsegment 1 zu einem Wälzlagerkäfig zu verbinden. Die Form der Verbindungselemente 22 ist im Wesentlichen abhängig von dem gewählten Kopplungselement.

Bevorzugt werden Funktionselemente, wie die Halteelemente 14, die Laschen 16, 18, die Führungselemente 20 und die Verbindungselemente 22, durch Umformen, wie beispielsweise Prägen, Tiefen, und/oder Biegen, an dem Käfigsegment 1 geformt. Ferner ist es vorteilhaft das zumindest eine Funktionselement an dem Metallblechbauteil 4 zu formen. Das heißt, das Metallblechbauteil 4 wird aus einer Metallblechtafel gelöst und bevor das Metallblechbauteil 4 zu dem Käfigsegment 1 zusammengefügt wird, werden die Funktionselemente in dem noch flachen Zustand geformt. Dies vereinfacht zum einen das Formen der Funktionselemente und zum anderen kann eine Positionierung der Funktionselemente in der ebenen Form des Metallblechbauteils 4 präziser und schneller erfolgen.

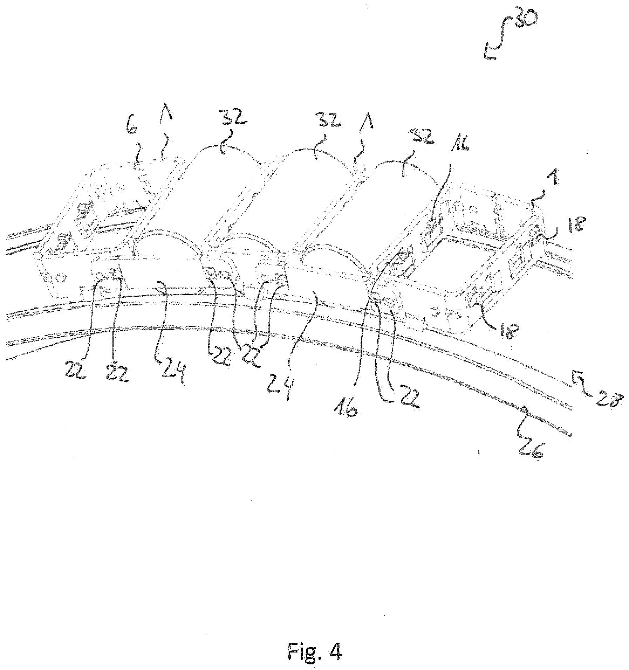

Fig. 4 zeigt eine perspektivische Ansicht einen Ausschnitt eines Wälzlagerkäfigs 30, bei dem das Käfigsegment 1 der Fig. 1 verwendet wird. Bevorzugt kann der Wälzlagerkäfig 30 bei Großwälzlagern mit einem Durchmesser von mehr als einem Meter eingesetzt werden. Der Wälzlagerkäfig 30 hat mehrere Käfigsegmente 1, wie voranstehend beschrieben, und mehrere Kopplungselemente 24, wobei die Kopplungselemente 24 in der Fig. 4 eine flache längliche Form haben. In der Fig. 4 werden die Kopplungselemente 24 mittels der Verbindungselemente 22 an dem Käfigsegment angebracht. Dabei können die Verbindungselemente 22 als Gewindelöcher und/oder Stifte und/oder Öffnungen ausgeführt sein, wobei ein entsprechend komplementäres Kopplungsmittel, wie beispielsweise eine Schraube, ein Stift oder eine Öffnung, an dem Kopplungselement angeordnet ist.

Wie beispielsweise in der Fig. 1 gezeigt ist, sind sowohl an einer der Tasche 2 zugewandten Fläche des Käfigsegments 1 als auch an einer der Tasche 2 abgewandten Fläche des Käfigsegments 1 ferner Laschen 16, 18 angeordnet, die dazu ausgelegt sind, Wälzkörper 32 zu halten. Daher wird bei dem Wälzlagerkäfig 30 jeder zweite Wälzkörper 32 in einer Tasche 2 des Käfigsegments 1 geführt, während die andere Hälfte der Wälzkörper 32 jeweils zwischen zwei Käfigsegmenten 1 geführt werden. Alternativ kann auch ein Käfigsegment 1 für jeweils einen Wälzkörper 32 vorgesehen sein. Die Wälzkörper 32 rollen auf einer Innenlaufbahn 28 eines Innenrings 26 und auf der Außenlaufbahn eines Außenrings (nicht gezeigt) eines Wälzlagers ab, um eine relative Rotation des Innenrings und des Außenrings zu ermöglichen.

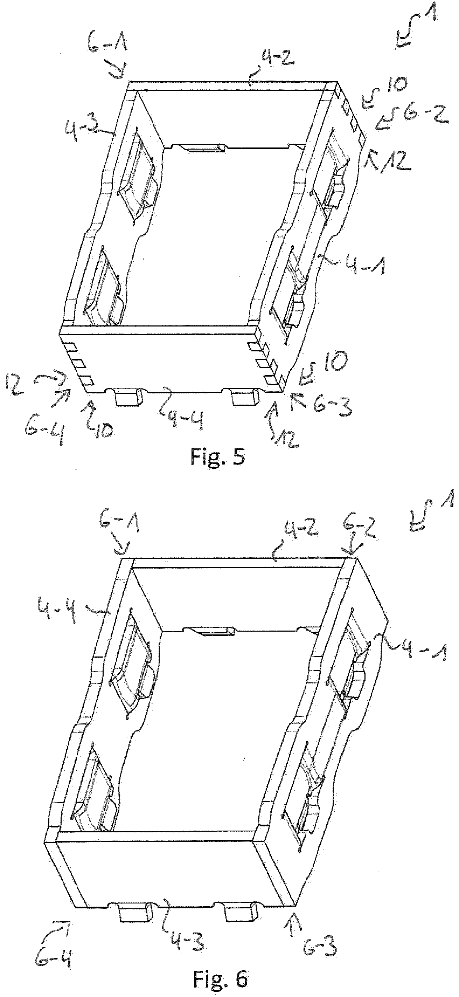

Fig. 5 zeigt ein Käfigsegment 1 gemäß einer zweiten Ausführungsform. Das Käfigsegment 1 der Fig. 5 umfasst im Gegensatz zu dem Käfigsegment 1 der Fig. 1 vier Metallblechbauteile 4-1, 4-2, 4-3, 4-4, die jeweils an den Ecken des Käfigsegments 1 zusammengefügt sind. Hierfür sind die jeweiligen Metallblechbauteile 4-1 bis 4-4 jeweils mit einem ersten Ausrichtungselement 10 und einem zweiten Ausrichtungselement 12 versehen, mittels deren Hilfe die Metallblechbauteile 4-1 bis 4-4 zusammengefügt werden.

Fig. 6 zeigt ein Käfigsegment 1 gemäß einer dritten Ausführungsform. Das Käfigsegment der Fig. 6 umfasst, wie auch das Käfigsegment der Fig. 5 vier Metallblechbauteile 4-1, 4-2, 4-3, 4-4, die jeweils an den Ecken des Käfigsegments 1 zusammengefügt sind. Hierfür sind die jeweiligen Metallblechbauteile 4-1 bis 4-4 jeweils ohne Ausrichtungselemente 10, 12 direkt über eine Stumpf- oder Kehlnaht miteinander verschweißt.

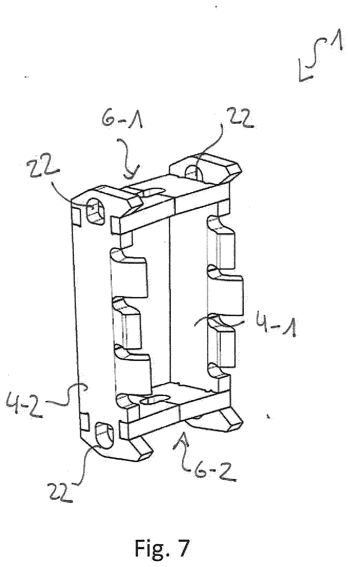

Fig. 7 zeigt ein Käfigsegment 1 gemäß einer vierten Ausführungsform. Das Käfigsegment der Fig. 7 umfasst im Gegensatz zu dem Käfigsegment der Fig. 1 zwei Metallblechbauteile 4-1, 4-2, die an zwei Fügestellen 6-1, 6-2 zusammengefügt sind. Ferner sind an dem Käfigsegment 1 der Fig. 7 als Verbindungselemente 22 Ösen vorgesehen, die beispielsweise mit einem Kopplungselement zusammenwirken können, das durch sie hindurchfädelbar ist, wie zum Beispiel ein Seil oder Draht. Bei einer Ausgestaltung der Verbindungselemente 22 als Ösen kann das Kopplungselement auf einfache Weise durch diese Ösen durchgeführt und bei Bedarf wieder entfernt werden. Das Kopplungselement ist dabei nicht an den Ösen fixiert, sondern kann sich in den Ösen bewegen. Hierdurch wird ein Spiel zwischen den Käfigsegmenten 1, und damit den Wälzkörpern 32, und eine Bewegung der Käfigsegmente zueinander nicht eingeschränkt. Alternativ können die Ösen auch als offene Haken oder Laschen ausgebildet sein, in die das Kopplungselement einhängbar oder einklipsbar oder einschnappbar ist.

Um den Materialeinsatz und den Fertigungsaufwand zu reduzieren, wird vorgeschlagen, das Käfigsegment 1 aus einem Metallblech herzustellen, so dass auf ein material- und aufwandintensives zerspanendes Bearbeitungsverfahren verzichtet werden kann. Dabei liegt in einer Vorstufe der Fertigung das Käfigsegment 1 als Bausatz vor, der aus einem oder mehreren ebenen Metallblechbauteilen 4 besteht, die mit Funktionselementen, die zum Halten und Führen von Wälzkörpern, zum Führen des Käfigsegments und/oder zum Verbinden der Käfigsegmente untereinander ausgebildet sind, versehen sind. Dabei können die Funktionselemente bereits in den Metallblechbauteilen vorgesehen sein, bevor die Metallblechbauteile 4 an ihren Enden zu dem fertigen Käfigsegment 1 zusammengefügt werden. Dadurch kann das Käfigsegment 1 mit einem geringen Materialeinsatz und/oder einem hohen Materialausnutzungsgrad sowie mit einem relativ geringen Arbeitsaufwand und damit kostengünstig, insbesondere auch bei kleinen Stückzahlen, hergestellt werden.

### Bezugszeichenliste

- 1: Käfigsegment
- 2: Tasche
- 4: Metallblechbauteil
- 6: Fügestelle
- 8: Ecke
- 10: Erstes Ausrichtungselement
- 12: Zweites Ausrichtungselement
- 14: Halteelement
- 16: Lasche
- 18: Lasche
- 20: Führungselement
- 22: Verbindungselement
- 24: Kopplungselement
- 26: Innenring
- 28: Innenlaufbahn
- 30: Wälzlagerkäfig
- 32: Wälzkörper

## Patentansprüche

1. Käfigsegment (1) für einen mehrteiligen Wälzlagerkäfig (30), insbesondere für Großwälzlager, wobei in einer Vorstufe der Fertigung das Käfigsegment (1) als Bausatz vorliegt, der aus einem oder mehreren ebenen Metallblechbauteilen (4) besteht, wobei die Metallblechbauteile (4) dazu ausgelegt sind, zusammengesetzt zu sein, um das Käfigsegment (1) auszubilden, wobei das Käfigsegment (1) in seiner zusammengesetzten Form mindestens eine Fügestelle (6) aufweist, an der zwei Enden der Metallblechbauteile (4) zusammengefügt sind, um eine Tasche (2) zu bilden, die dazu geeignet ist, zumindest einen rollenförmigen Wälzkörper (32) aufzunehmen, wobei zumindest eines der Metallblechbauteile (4) mit zumindest einem Halteelement (14, 16, 18) versehen ist, das dazu ausgebildet ist, mit dem Wälzkörper (32) zusammenzuwirken, um den Wälzkörper (32) zu halten, wobei das Halteelement (14, 16, 18) in der zusammengesetzten Form des Käfigsegments (1) der Tasche (2) zugewandt und/oder abgewandt ist, wobei das zumindest eine Halteelement (14, 16, 18) umgeformt ist,
**dadurch gekennzeichnet, dass** zumindest eines der Metallblechbauteile ferner mit zumindest einem Verbindungselement versehen ist, das dazu ausgelegt ist, mit einem Kopplungselement zusammenzuwirken, um das Käfigsegment mit einem weiteren Käfigsegment zu verbinden, wobei das Verbindungselement umgeformt ist.

2. Käfigsegment (1) gemäß Anspruch 1, wobei das eine oder die mehreren Metallblechbauteile (4) des Käfigsegments (1) aus einem Metallblech geschnitten, insbesondere lasergeschnitten, gestanzt und/oder genibbelt sind.

3. Käfigsegment (1) gemäß Anspruch 1 oder 2, wobei zumindest eines der Metallblechbauteile (4) der Vorstufe des Käfigsegments (1) ferner mit zumindest einem Funktionselement (14, 16, 18, 20, 22) versehen ist, wobei das zumindest eine Funktionselement (14, 16, 18, 20, 22) umgeformt ist.

4. Käfigsegment gemäß Anspruch 3, wobei das Käfigsegment (1) bezogen auf einen in einem Wälzlager (30) eingebauten Zustand eine Länge, die durch die axiale Länge des in dem Käfigsegment (1) aufnehmbaren Wälzkörpers (32) definiert ist, eine Breite, die durch den Durchmesser des aufnehmbaren Wälzkörpers (32) definiert ist, und eine Höhe hat, wobei die Höhe des Käfigsegments (1) über das Käfigsegment hinweg im Wesentlichen gleich ist.

5. Käfigsegment (1) gemäß einem der Ansprüche 3 oder 4, wobei das zumindest eine Funktionselement (14, 16, 18, 20, 22) an dem Käfigsegment (1) in der Vorstufe der Fertigung ausgeformt ist.

6. Käfigsegment (1) gemäß einem der Ansprüche 3 bis 5, wobei das Funktionselement (14, 16, 18, 20, 22) geprägt, tiefgezogen und/oder gebogen ist.

7. Käfigsegment gemäß einem der Ansprüche 3 bis 6, wobei das zumindest eine Funktionselement (14, 16, 18, 20, 22) ein Führungselement (20) ist, das dazu ausgebildet ist, mit einem Bord zusammenzuwirken, um das Käfigsegment (1) zu führen, wobei das Führungselement (20) in der zusammengesetzten Form des Käfigsegments (1) dem Bord zugewandt ist.

8. Käfigsegment gemäß einem der vorherigen Ansprüche, wobei das Käfigsegment (1) an der Fügestelle (6) an dem ersten Ende ein erstes Ausrichtungselement (10) und an dem zweiten Ende ein zweites Ausrichtungselement (12) aufweist, wobei das zweite Ausrichtungselement (12) komplementär zu dem ersten Ausrichtungselement (10) ist, und wobei das erste und das zweite Ausrichtungselement (10, 12) zusammenwirken, um das erste Ende und das zweite Ende in zumindest einer ersten Richtung festzulegen.

9. Wälzlagerkäfig (30) mit einer Mehrzahl von Käfigsegmenten (1) nach einem der Ansprüche 1 bis 8, wobei eine Mehrzahl von Käfigsegmenten (1) über ein Kopplungselement zumindest zeitweise verbindbar ist, wobei das Kopplungselement mit zumindest einem Verbindungselement (22) zusammenwirkt.

10. Wälzlager mit mindestens einem Innenring (26) und mindestens einem Außenring, wobei zwischen dem Innenring (26) und dem Außenring Wälzkörper (32) angeordnet sind, wobei die Wälzkörper (32) durch einen Wälzlagerkäfig (30) nach Anspruch 9 gehalten werden.

## Claims

1. Cage segment (1) for a multi-part rolling bearing cage (30), in particular for large-diameter rolling bearings, wherein in a preliminary stage of production, the cage segment (1) is present as a kit consisting of one or a plurality of flat sheet metal components (4), wherein the sheet metal components (4) are designed to be assembled to form the cage segment (1), wherein the cage segment (1) in its assembled form has at least one joint (6) at which two ends of the metal sheet components (4) are joined together to form a pocket (2) that is suitable for receiving at least one roller-shaped rolling element (32), wherein at least one of the metal sheet components (4) is provided with at least one holding element (14, 16, 18) that is designed to interact with the rolling element (32) to hold the rolling element (32), wherein the holding element (14, 16, 18) in the assembled form of the cage segment (1) faces and/or faces away from the pocket (2), the at least one holding element (14, 16, 18) being formed,
**characterized in that** at least one of the metal sheet components is furthermore provided with at least one connecting element which is conceived to interact with a coupling element in order to connect the cage segment to a further cage segment, the connecting element being formed.

2. Cage segment (1) according to Claim 1, wherein the one or the plurality of metal sheet components (4) of the cage segment (1) are cut, in particular laser-cut, punched and/or nibbled, from a metal sheet

3. Cage segment (1) according to Claim 1 or 2, wherein at least one of the metal sheet components (4) of the precursor of the cage segment (1) is furthermore provided with at least one functional element (14, 16, 18, 20, 22), the at least one functional element (14, 16, 18, 20, 22) being formed.

4. Cage segment according to Claim 3, wherein the cage segment (1), in a state installed in a rolling bearing (30), has a length defined by the axial length of the rolling element (32) able to be accommodated in the cage segment (1), a width defined by the diameter of the rolling element (32) able to be accommodated, and a height, the height of the cage segment (1) being substantially identical across the cage segment.

5. Cage segment (1) according to one of Claims 3 or 4, wherein the at least one functional element (14, 16, 18, 20, 22) is formed on the cage segment (1) in the preliminary stage of production.

6. Cage segment (1) according to one of Claims 3 to 5, wherein the functional element (14, 16, 18, 20, 22) is embossed, is deep drawn and/or bent.

7. Cage segment according to one of Claims 3 to 6, wherein the at least one functional element (14, 16, 18, 20, 22) is a guide element (20) which is conceived to interact with a rim in order to guide the cage segment (1), the guide element (20) in the assembled form of the cage segment (1) facing the rim.

8. Cage segment according to one of the preceding claims, wherein the cage segment (1) has at the joint (6) on the first end a first alignment element (10) and on the second end a second alignment element (12), wherein the second alignment element (12) complements the first alignment element (10), and wherein the first and second alignment elements (10, 12) interact in order to fixedly establish the first end and the second end in at least one first direction.

9. Rolling bearing cage (30) having a plurality of cage segments (1) according to one of Claims 1 to 8, wherein a plurality of cage segments (1) are connectable at least temporarily by way of a coupling element, the coupling element interacting with at least one connecting element (22).

10. Rolling bearing having at least one inner ring (26) and at least one outer ring, wherein rolling elements (32) are disposed between the inner ring (26) and the outer ring, the rolling elements (32) being held by a rolling bearing cage (30) according to Claim 9.

## Revendications

1. Segment (1) de cage pour une cage (30) de palier à roulement en plusieurs parties, en particulier pour des paliers à roulement de grande taille, le segment (1) de cage se présentant, dans une étape préliminaire de la production, sous la forme d'un kit, qui est constitué d'un ou plusieurs composants (4) plans en tôle métallique, les composants (4) en tôle métallique étant conçus pour être assemblés pour former le segment (1) de cage, le segment (1) de cage comportant, dans sa forme assemblée, au moins un emplacement de jonction (6), sur lequel deux extrémités des composants (4) en tôle métallique sont regroupées pour obtenir une poche (2) qui est adaptée pour recevoir au moins un corps de roulement (32) en forme de rouleau, au moins un des composants (4) en tôle métallique étant pourvu d'au moins un élément de maintien (14, 16, 18), qui est formé pour coopérer avec le corps de roulement (32) pour maintenir le corps de roulement (32), l'élément de maintien (14, 16, 18) étant tourné vers/opposé à la poche (2) dans la forme assemblée du segment (1) de cage, l'au moins un élément de maintien (14, 16, 18) étant façonné,
**caractérisé en ce qu'**au moins un des composants en tôle métallique est pourvu en outre d'au moins un élément de liaison, qui est conçu pour coopérer avec un élément de couplage pour relier le segment de cage à un autre segment de cage, l'élément de liaison étant façonné.

2. Segment (1) de cage selon la revendication 1, le ou les plusieurs composants (4) en tôle métallique du segment (1) de cage étant découpés, en particulier découpés au laser, poinçonnés et/ou grignotés d'une tôle métallique.

3. Segment (1) de cage selon la revendication 1 ou 2, au moins un des composants (4) en tôle métallique de l'étape préliminaire du segment (1) de cage étant pourvu en outre d'au moins un élément fonctionnel (14, 16, 18, 20, 22), l'au moins un élément fonctionnel (14, 16, 18, 20, 22) étant façonné.

4. Segment de cage selon la revendication 3, le segment (1) de cage présentant par rapport à un état monté dans un palier à roulement (30), une longueur, qui est définie par la longueur axiale du corps de roulement (32) pouvant être reçu dans le segment (1) de cage, une largeur, qui est définie par le diamètre du corps de roulement (32) pouvant être reçu, et une hauteur, la hauteur du segment (1) de cage étant sensiblement identique au-delà du segment de cage.

5. Segment (1) de cage selon l'une des revendications 3 ou 4, l'au moins un élément fonctionnel (14, 16, 18, 20, 22) étant déformé sur le segment (1) de cage dans l'étape préliminaire de la production.

6. Segment (1) de cage selon l'une des revendications 3 à 5, l'élément fonctionnel (14, 16, 18, 20, 22) étant estampé, embouti et/ou cintré.

7. Segment de cage selon l'une des revendications 3 à 6, l'au moins un élément fonctionnel (14, 16, 18, 20, 22) étant un élément de guidage (20) qui est formé pour coopérer avec un rebord pour guider le segment (1) de cage, l'élément de guidage (20) étant tourné vers le rebord dans la forme assemblée du segment (1) de cage.

8. Segment de cage selon l'une des revendications précédentes, le segment de cage (1) comportant, sur l'emplacement de jonction (6), un premier élément d'alignement (10) sur la première extrémité et un deuxième élément d'alignement (12) sur la deuxième extrémité, le deuxième élément d'alignement (12) étant complémentaire par rapport au premier élément d'alignement (10), et le premier et le deuxième élément d'alignement (10, 12) coopérant pour définir la première extrémité et la deuxième extrémité dans au moins une première direction.

9. Cage (30) de palier à roulement avec une multitude de segments (1) de cage selon l'une des revendications 1 à 8, une multitude de segments (1) de cage pouvant être reliés au moins temporairement par un élément de couplage, l'élément de couplage coopérant avec au moins un élément de liaison (22).

10. Palier à roulement avec au moins une bague intérieure (26) et au moins une bague extérieure, des corps de roulement (32) étant disposés entre la bague intérieure (26) et la bague extérieure, les corps de roulement (32) étant maintenus par une cage (30) de palier à roulement selon la revendication 9.
